# EUROPÄISCHE PATENTSCHRIFT

(11) **EP 0 337 168 B1**
(45) Veröffentlichungstag und Bekanntmachung des Hinweises auf die Patenterteilung: **27.01.1993**
(21) Anmeldenummer: 89105100.5
(22) Anmeldetag: 22.03.1989
(51) Int. Cl.: B65C 9/16, F16H 35/02

(54) **Etikettierstation für Gegenstände, insbesondere Flaschen**
Labelling station for articles, especially for bottles
Poste d'étiquetage pour articles, en particulier des bouteilles

(30) Priorität: 09.04.1988 DE 3811869; 15.03.1989 DE 3908378
(43) Veröffentlichungstag der Anmeldung: 18.10.1989
(73) Patentinhaber: ETI-TEC MASCHINENBAU GMBH, D-40699 Erkrath (DE)
(72) Erfinder: Zodrow, Rudolf, D-4000 Düsseldorf (DE)

(56) Entgegenhaltungen:
- DE-A- 2 449 380
- DE-A- 3 206 704
- FR-A- 2 279 623
- FR-A- 2 344 763

## Beschreibung

Die Erfindung bezieht sich auf eine Etikettierstation für Gegenstände, insbesondere Flaschen, mit mehreren längs einer Bahn hintereinander angeordneten Stationen, und zwar einer Beleimungswalze, einem Etikettenkasten und einem Etikettenübertragungszylinder sowie mit mindestens einem auf einem sich drehenden Träger drehbar gelagerten und bei jeder Umdrehung des Trägers an den Stationen mit unterschiedlicher Winkelgeschwindigkeit vorbeibewegten Entnahmeelement für die Etiketten, das jeweils eine nach außen gewölbte, sich an den Stationen abwälzende Aufnahmefläche für das Etikett aufweist, wobei als Antrieb für jedes Entnahmeelement ein Kurvengetriebe vorgesehen ist, das aus einer für alle Entnahmeelemente gemeinsamen, ortsfesten Doppelkurvenscheibe mit in zwei Ebenen übereinander angeordneten einseitigen Kurven und aus zwei Sätzen von je zwei Eingriffsgliedern besteht, die zueinander winklig versetzt auf der Antriebswelle des Entnahmeelementes oder einer mit ihr gekuppelten Lagerwelle mittels eines Trägerelementes gelagert sind und durch Formschluß mit den beiden Kurven bei Drehen des Trägers den Zwangslauf eines jeden Entnahmelementes über seine volle Umdrehung sichern.

Um bei Etikettiermaschinen die Entnahmeelemente an den verschiedenen Stationen auf ihren gesamten Umlauf gleichsinnig mit unterschiedlicher Winkelgeschwindigkeit drehen zu können, sind verschiedene kurvengesteuerte Antriebe bekannt.

Bei einem ersten Antrieb (DT 24 36 003 P2) werden die Entnahmelemente jeweils von einem Paar Hebelarme angetrieben, die jeweils mit einem Eingriffsglied in einer geschlossenen Nutkurve geführt sind. Die sich teilweise überschneidenden Nutkurven liegen zum Zwecke der eindeutigen Führung der Hebelarme in verschiedenen Ebenen. Aufgrund der Führung eines jeden Eingriffsgliedes an zwei Flanken der ihm zugeordneten Nutkurve ist jedes Eingriffsglied eindeutig geführt. Die Nutkurven sind so gestaltet, daß das eine Eingriffsglied drehmomentwirksam ist, wenn sich das andere Eingriffsglied in einer Totlage befindet. Ein solcher Antrieb hat sich jedoch in der Praxis nicht durchsetzen können.

Auch ein anderer Antrieb bei einer Etikettiermaschine der eingangs genannten Art (DE 27 09 521 A1) hat sich in der Praxis nicht durchsetzen können. Bei diesem Antrieb sind in zwei übereinander angeordneten Ebenen zwei Kurvenscheiben mit Außenkurven vorgesehen, denen jeweils ein Satz aus jeweils zwei Eingriffsgliedern zugeordnet ist. Die vier Eingriffsglieder sind auf dem Trägerelement um jeweils 90° gegeneinander versetzt und mit gleichem radialen Abstand (gleiche Hebelarmlänge) von der Lagerwelle des Trägerelementes angeordnet. Ob besondere Vorkehrungen für einen kompakten Aufbau des Antriebes mit einer möglichst günstigen Belastung des Antriebes an den verschieden gestalteten Stationen getroffen sind, läßt sich dem Stand der Technik nicht entnehmen.

Der Erfindung liegt die Aufgabe zugrunde, eine Etikettierstation der eingangs genannten Art mit einem einfach gestalteten- kompakten Antrieb zu schaffen, bei dem unter Berücksichtigung der unterschiedlichen Winkelgeschwindigkeiten an den einzelnen Stationen die Belastung des Antriebes möglichst günstig ist.

Diese Aufgabe wird erfindungsgemäß dadurch gelöst, daß sämtliche Eingriffsglieder mit ihren Achsen innerhalb der Gangpolbahn des Kurvengetriebes liegen und mindestens ein Eingriffsglied, vorzugsweise sämtliche Eingriffsglieder, teilweise außerhalb der Gangpolbahn liegen. Besonders günstig bezüglich der kompakten Bauweise unter Belastung des Antriebes ist es, wenn einige Eingriffsglieder gegeneinander um einen Winkel α ungleich 90° versetzt sind und unterschiedlich lange Hebelarme haben. Bei dieser Ausgestaltung ist es für eine günstige Verteilung der Belastung auf die einzelnen Eingriffsglieder unter Berücksichtigung ihrer unterschiedlich langen Hebelarme von Vorteil, wenn sich folgende Eingriffsalternativen ergeben:
Entweder sind zwei Eingriffsglieder mit großen Hebelarmen oder zwei Eingriffsglieder mit kleinen Hebelarmen und ein Eingriffsglied mit großem Hebelarm im Eingriff mit den Kurven.

Unter Berücksichtigung der an den einzelnen Stationen unterschiedlichen Anforderungen sollten die geometrischen Verhältnisse für die Eingriffsglieder insbesondere so gewählt werden, daß sich folgende Eingriffsalternativen ergeben:
a) An der Leimwalze sind zwei Eingriffsglieder mit kleinem Hebelarm drehmomentübertragend und ein Eingriffsglied mit großem Hebelarm hält gegen.
b) An dem Etikettenkasten ist ein Eingriffsglied mit großem Hebelarm drehmomentübertragend und ein Eingriffsglied mit großem Hebelarm hält gegen.
c) An dem Etikettenübertragungszylinder ist ein Eingriffsglied mit großem Hebelarm drehmomentübertragend und zwei Eingriffsglieder mit kleinem Hebelarm halten gegen.

Durch diese Lösung ist gewährleistet, daß bei kompaktem Aufbau der Etikettierstation das Entnahmeelement nicht nur an jeder Stelle definiert geführt wird, sondern vor allem die Belastung der am Antrieb beteiligten Elemente möglichst günstig ist. Wenn nur ein Eingriffsglied drehmomentwirksam ist, ist es das mit dem großen Hebelarm, während bei zwei drehmomentwirksamen Eingriffsgliedern es die Eingriffsgliedern mit den kleinen Hebelarmen sind. So ist von besonderem Vorteil, daß an der Leimwalze, wo infolge der geforderten hohen Beschleunigung in der Eigenrotation der Entnahmeelemente das größte Drehmoment aufgebracht werden muß, zwei Eingriffsglieder mit kleinem Hebelarm drehmomentwirksam sind.

Hinsichtlich einer Minimierung der wirksamen Kräfte ist ferner von Vorteil, wenn das am Etikettenkasten drehmomentwirksame Eingriffsglied mit großem Hebelarm der der Antriebs- oder Lagerwelle näherliegenden Kurve zugeordnet ist.

Nach einer weiteren Ausgestaltung sollte jeder Satz Eingriffsglieder ein Eingriffsglied mit einem langen Hebelarm und ein gegenüberliegendes Eingriffsglied mit einem kurzen Hebelarm umfassen.

Weitere geometrische Besonderheiten der Erfindung bestehen darin, daß der Laufkreisradius der Lagerwelle größer ist als der Laufkreisradius der Antriebswelle des Entnahmeelementes und daß die Achsen der Antriebsglieder innerhalb der Gangpolbahn des Kurvengetriebes liegen.

Die mit der Erfindung erzielte Kompaktbauweise läßt sich bei einem zwischen der Antriebswelle und der Lagerwelle liegenden Zahnradübersetzungsverhältnis zusammen mit einem robusten Aufbau des Antriebes nach einer Ausgestaltung der Erfindung dadurch verwirklichen, daß zumindest ein Eingriffsglied mit langem Hebelarm mit seiner Peripherie den Teilkreis des auf der Lagerwelle angeordneten Zahnrades tangiert oder überragt. Sofern, wie an sich bekannt, die Eingriffsglieder aus auf Lagerzapfen gelagerten Rollen bestehen, sollten die der Lager- beziehungsweise Antriebswelle nächstgelegenen Lagerzapfen einstückig mit dem Trägerelement verbunden sein, das auf einem radial zurückversetzten Absatz das Zahnrad trägt. Selbst für die Eingriffsglieder mit großem Hebelarm ergibt sich bei dieser Ausgestaltung eine robuste Verbindung mit dem Trägerelement.

Im folgenden wird die Erfindung anhand einer ein Ausführungsbeispiel darstellenden Zeichnung näher erläutert. Im einzelnen zeigen:
Fig. 1 eine Etikettierstation in schematischer Darstellung in Draufsicht,
Fig. 2 ein Kurvengetriebe der Etikettierstation gemäß Figur 1 im Axialschnitt nach der Linie I-I der Figur 1,
Fig. 3 die Etikettierstation gemäß Figur 1 in Draufsicht und reduzierter Darstellung mit herausgehoben dargestellten Außenkurven,
Fig. 4 und Fig. 5 die Etikettierstation gemäß Figur 1 im Ausschnitt in zwei Abwälzphasen eines Entnahmeelementes an einer Leimwalze in Draufsicht,
Fig. 6 und Fig. 7 die Etikettierstation gemäß Figur 1 im Ausschnitt in zwei Phasen des Abwälzvorganges eines Entnahmeelementes an einem Etikettenkasten **und**

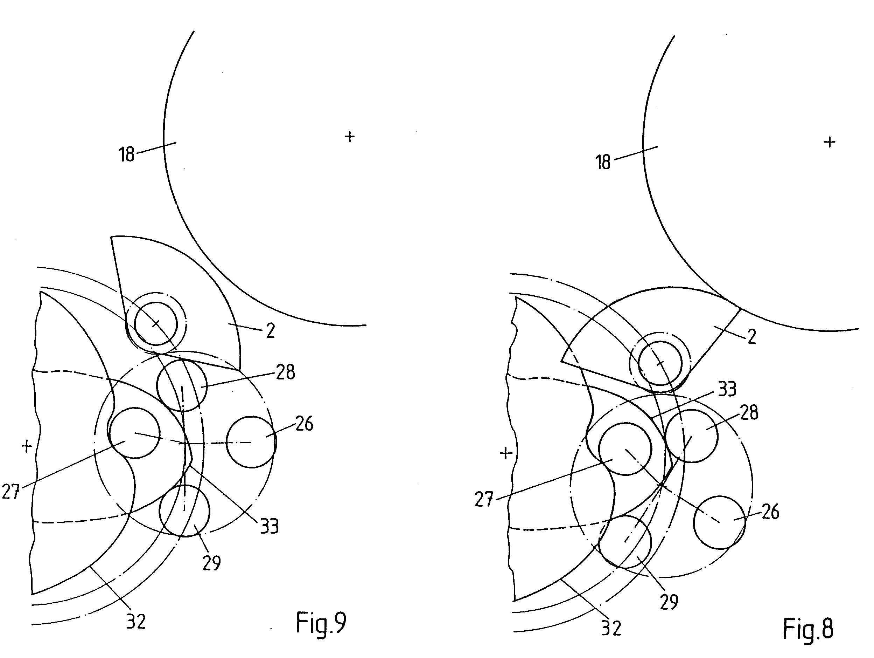

Fig. 8 und Fig. 9 die Etikettiermaschine gemäß Figur 1 im Ausschnitt in zwei Phasen des Abwälzvorganges eines Entnahmeelementes am Greiferzylinder.

Die in der Figur maßstäblich dargestellte Etikettierstation besteht aus einem tellerförmigen Träger 1, auf dem unter gleichen Winkeln vier Entnahmeelemente 2,3,4,5 angeordnet sind. Jedes Entnahmeelement 2,3,4,5 weist eine zylindrisch gekrümmte Aufnahmefläche 2′,3′,4′,5′ für ein Etikett auf und ist zwischen dieser und deren Krümmungsmittelpunkt mit einer Antriebswelle 6,7,8,9 im Träger 1 gelagert. Bei Drehung des Trägers 1 in Richtung des Pfeils 10 drehen sich zwangsläufig durch einen noch zu beschreibenden Antrieb die Entnahmeelemente 2,3,4,5 gleichsinnig in Richtung der Pfeile 11,12,13,14, also gegensinnig zum Träger 1.

Bei dieser Drehung des Trägers 1 werden die Entnahmeelemente 2,3,4,5 an verschiedenen Stationen, und zwar einer in Richtung des Pfeils 10 rotierenden Leimwalze 15, einem feststehenden Etikettenkasten 16 mit einem sich darin befindlichen Stapel von Etiketten und einem in Richtung des Pfeils 17 rotierenden Etikettenübertragungszylinder (Greiferzylinder) 18 unter Ausführung einer Abwälzbewegung an den einzelnen Stationen vorbeibewegt. Dabei wird zunächst die Aufnahmefläche 2′,3′,4′,5′ eines jeden Entnahmelementes 2,3,4,5 durch die Leimwalze 15 beleimt. Beim Abwälzen an dem vorderen Etikett des im Etikettenkasten 16 befindlichen Etikettenstapels wird das vordere Etikett infolge der Haftwirkung des Leims an der Aufnahmefläche 2′,3′,4′,5′ dem Etikettenstapel entnommen und bei weiterer Drehung des Trägers 1 dem Greiferzylinder 18 zugeführt, der es von der Aufnahmefläche 2′,3′,4′,5′ abnimmt und auf hier nicht dargestellte, an ihm vorbeibewegte Gegenstände, wie Flaschen, überträgt.

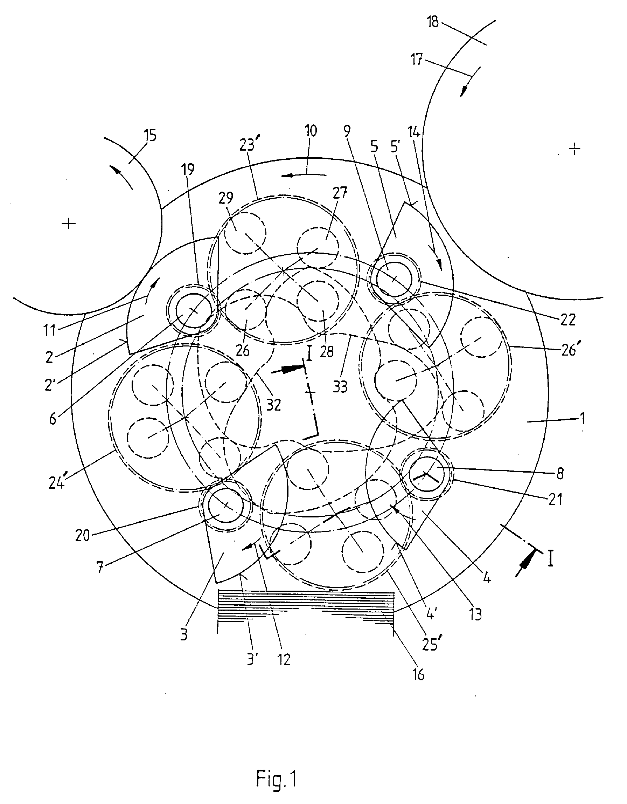

Damit an den verschieden gestalteten Stationen 15,16,17 die Aufnahmefläche 2′,3′,4′,5′ sich abwälzen kann, ist es erforderlich, daß die Eigenrotation eines jeden Entnahmeelementes 2,3,4,5 in Richtung des Pfeils 11,12,13,14 beschleunigt und verzögert wird. Für diesen Zweck ist jedes Entnahmeelement 2,3,4,5 über ein auf seiner Antriebswelle 6,7,8,9 sitzendes Ritzel 20,21,22 mit einem größeren Zahnrad 23′,24′,25′,26′ verbunden, das in Drehrichtung hinter dem zugehörigen Entnahmeelement 2,3,4,5 mittels einer in Figur 1 nicht dargestellten Lagerwelle im Träger 1 gelagert ist.

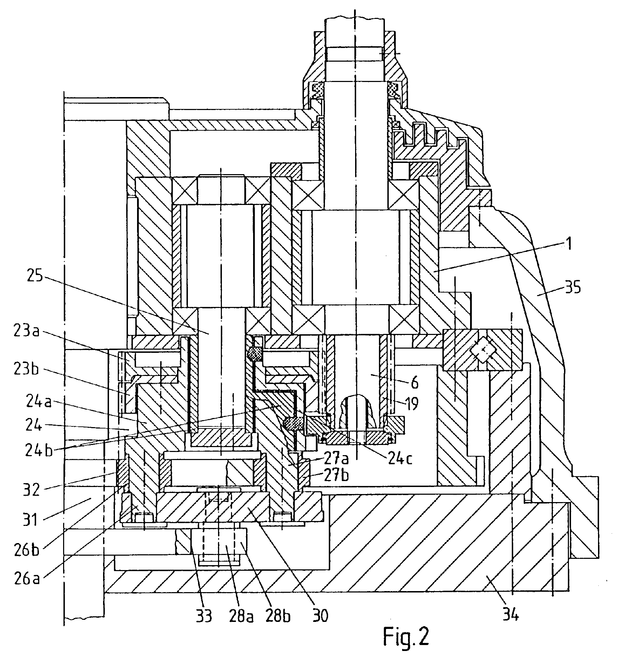

Das größere Zahnrad 23′,24′,25′,26′ ist Teil eines Kurvengetriebes. Jedes dieser Kurvengetriebe hat den gleichen Aufbau, so daß im folgenden die Beschreibung auf das dem Entnahmeelement 2 zugeordnete, in Figur 2 im Detail dargestellte Kurvengetriebe beschränkt werden kann.

Auf dem unteren Ende der im Träger gelagerten Lagerwelle 25 sitzt drehfest ein Trägerelement 24. Das Trägerelement 24 besteht aus einem äußeren Körper 24a und einem inneren Körper 24b. Der äußere Körper 24a weist nach innen gerichtete Klauen und der innere Körper 24b nach außen gerichtete, zwischen den nach innen gerichteten Klauen liegende Klauen auf. Zwischen den beiden Körpern und damit auch zwischen den ineinandergreifenden Klauen ist eine Einlage 24c aus gummielastischem Material angeordnet. Ein derartiges Trägerelement ist Gegenstand der älteren deutschen Patentanmeldung P 38 11 868.

Der äußere Körper 24a trägt auf einem radial zurückversetzten oberen Absatz das größere Zahnrad 23′, das aus zwei zum Zwecke der Spielbeseitigung gegeneinander verdrehbaren und am äußeren Körper 24a mittels nicht dargestellter Schraubenbolzen feststellbaren Zahnrädern 23a,23b besteht.

An der Unterseite des hier nicht zurückversetzten Trägerelementes 24 sind zwei gegenüberliegende Eingriffsglieder 25,26 aus einem Lagerzapfen 26a,27a und einer darauf drehbar gelagerten Rolle 26b,27b befestigt. Die Lagerzapfen 26a,27a sind mit dem nicht zurückversetzten unteren Teil des Trägerelementes einstückig verbunden. Wie sich der Figur 2 aber auch der Figur 1 entnehmen läßt, überragt die Rolle 26b mit ihrer äußeren Peripherie den Teilkreis des Zahnrades 23′,23a,23b. Bei dieser Geometrie wäre eine robuste Ausführung in zweiteiliger Bauweise, bei der der zugehörige Lagerzapfen 26a in einer Bohrung im Trägerelement unterzubringen wäre, nicht zu erreichen.

Die Lagerzapfen 26a,27a tragen an ihrer Unterseite ein Brückenglied 30 in Form eines Ringes, an dessen unterer Seite zwei gegenüberliegende und zu den Eingriffsgliedern 26,27 versetzte Eingriffsglieder 28,29, die ebenfalls aus einem Lagerzapfen 28a und einer darauf angeordneten Rolle 28b bestehen, befestigt sind. Die Eingriffsglieder 26-28 sind, wie Figur 1 zeigt, um einen Winkel α gegeneinander versetzt, der zwischen 70° und 110° liegt und ungleich 90° ist. Darüber hinaus haben die Eingriffsglieder 25-28 einen unterschiedlichen radialen Abstand von der Achse der Lagerwelle 25, greifen also mit unterschiedlicher Hebelarmlänge an. In jeder Ebene ist ein Eingriffsglied mit langem und ein Eingriffsglied mit kurzem Hebelarm angeordnet. Den beiden Sätzen von Eingriffsgliedern 26-29 ist eine Doppelkurvenscheibe 31 mit zwei äußeren Kurven 32,33 zugeordnet. Diese Doppelkurvenscheibe 31 ist über eine Trägerbrücke 34 mit dem Maschinengestell 35 der Etikettierstation starr verbunden. Die Außenkurven 32,33 haben die Grundform von an beiden Längsseiten eingebuchteten Ovalen und sind zueinander kreuzweise angeordnet.

Wie in Figur 1 dargestellt und in Figur 2 strichpunktiert angedeutet ist, liegen die Außenkurven 32,33 in Teilabschnitten im Bereich der Achse der Lagerwelle 25. Da aber durch die Konstruktion mit dem zwischen den Außenkurven 32,33 liegenden Brückenglied 30 ein wellenfreier Raum 36 im Bereich der Außenkurve 32 mitten zwischen den Eingriffsgliedern 26,27 geschaffen worden ist und im Bereich der unteren Außenkurve 33 die Antriebs- oder Lagerwelle 25 ohnehin nicht durchgezogen werden brauchte, können die Außenkurven 32,33 über ihre gesamte Länge optimal gestaltet und der gesamte Antrieb mit geringem Aufwand an Bauelementen kompakt gestaltet werden. An jeder Stelle der Außenkurven 32,33 sind mindestens ein Eingriffsglied drehmomentübertragend wirksam und mindestens ein Eingriffsglied abstützend wirksam, so daß sich immer eine definierte Drehstellung für das Entnahmeelement ergibt.

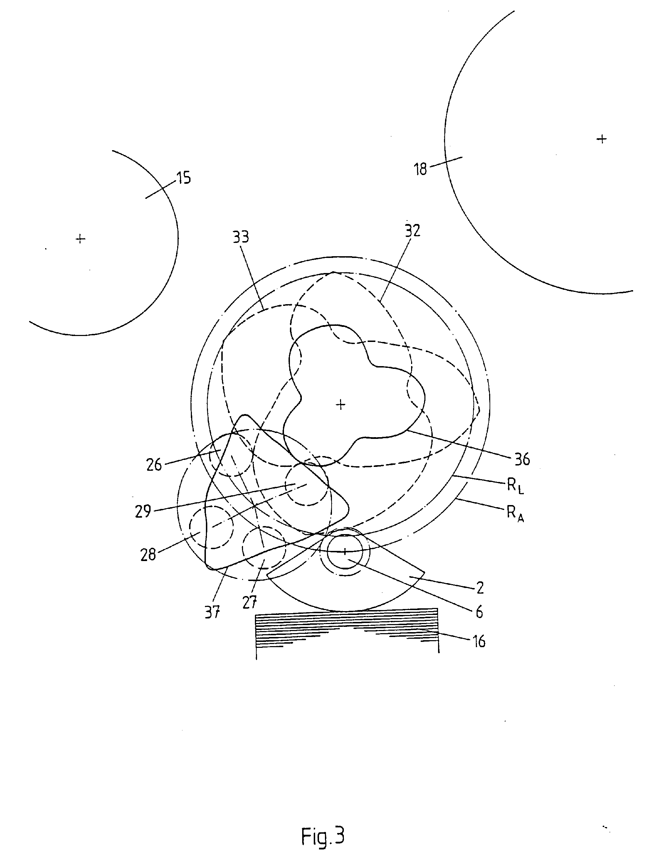

In Figur 3 sind beispielhaft für ein Kurvengetriebe die stationäre Rastpolkurve 36 und die dazugehörige bewegliche Gangpolkurve 37 dargestellt. Rastpolkurve 36 und Gangpolkurve 37 repräsentieren Kurven, die punktförmig aufeinander abwälzen und dem gleichen Bewegungsgesetz folgen wie das mit den beiden Außenkurven 32,33 und den dazugehörigen Eingriffsgliedern 26-29 verwirklichte Kurvengetriebe. An dieser Darstellung ist zu erkennen, daß die Achsen aller Eingriffsglieder 26-29 innerhalb und ihre Peripherie außerhalb der beweglichen Gangpolkurve 37 liegen. Aus Figur 3 ist ferner zu entnehmen, daß der Laufkreis R_{L} der Lagerwelle 25 innerhalb des Laufkreises R_{A} der Antriebswelle 6 des Entnahmeelementes liegt. Auch diese Geometrie trägt zur kompakten Bauweise bei.

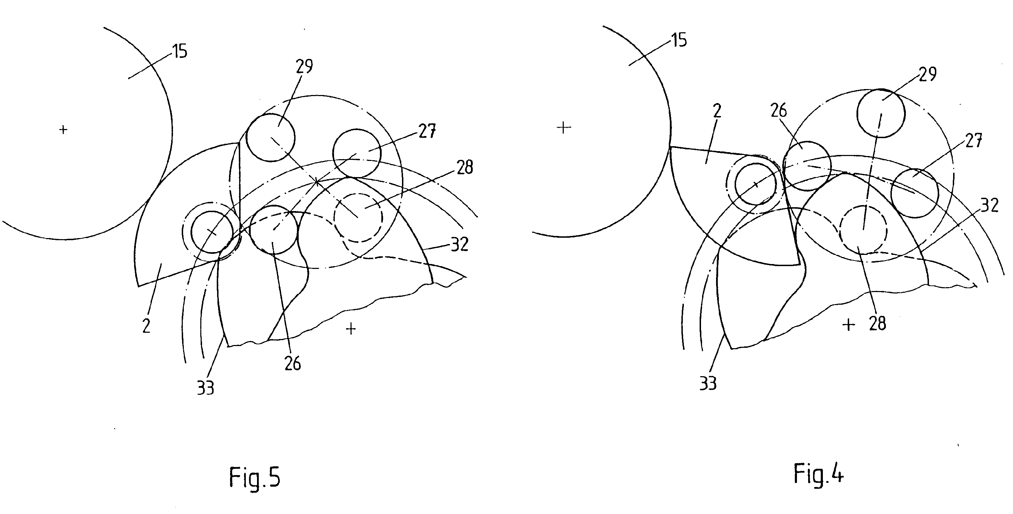

Die Figuren 4 und 5 zeigen den Eingriff der Eingriffsglieder an der Leimwalze. Zu Beginn des Abwälzvorganges sind die beiden Eingriffsglieder 27,28 drehmomentwirksam und das Eingriffsglied 26 mit langem Hebelarm gegenhaltend wirksam im Eingriff. In dieser für die Beleimung besonders wichtigen Anfangsphase ergibt sich also durch den doppelten Eingriff der beiden Eingriffsglieder mit kurzem Hebelarm und dem gegenhaltenden Eingriffsglied mit langem Hebelarm eine optimale Führung. Im weiteren Verlauf des Abwälzvorganges, wenn die Anforderungen an die Führung des Entnahmeelementes nicht mehr so hoch sind, geht dann allerdings der Eingriff eines Eingriffsgliedes mit kurzem Hebelarm verloren. Dieser Augenblick ist in Figur 5 dargestellt.

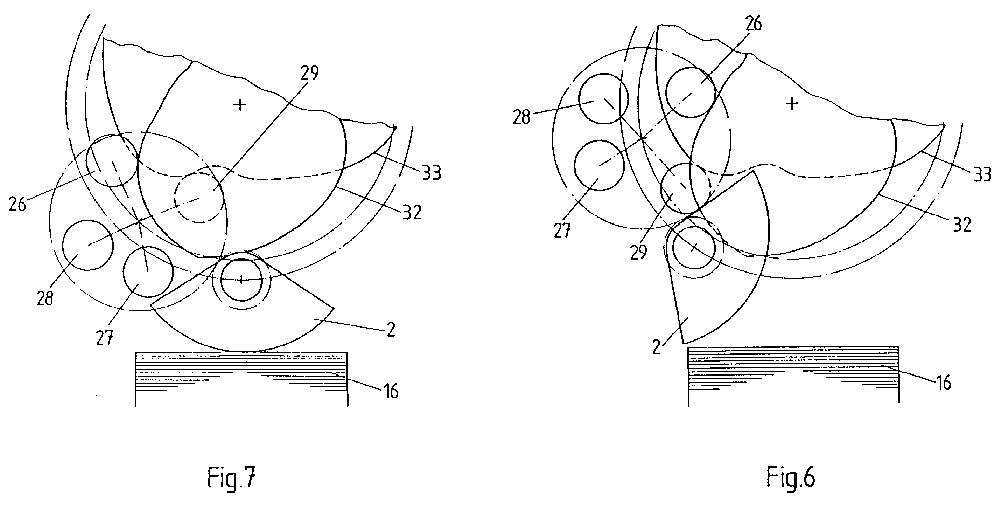

Im Bereich des Etikettenkastens sind gemäß Figur 6 und 7 die beiden Eingriffsglieder 26,29 mit großem Hebelarm im Eingriff. Dabei ist von Beginn des Abwälzvorganges bis mindestens zur Mitte das der Lagerwelle nächste Eingriffsglied 26 drehmomentwirksam, während das Eingriffsglied 29 gegenhaltend ist. Durch die Nähe des Eingriffsgliedes 26 mit langem Hebelarm zur Lagerstelle ergibt sich ebenfalls eine sehr exakte Führung.

Da von allen Stationen 15,16,17 am Greiferzylinder 18 die Führung des Entnahmeelementes 2 am unkritischsten ist, ist hier zu Beginn des Abwälzvorganges das Eingriffsglied 29 mit langem Hebelarm drehmomentwirksam, das von der Lagerwelle 25 den größten Abstand hat. Diese im Vergleich zu den drehmomentwirksamen Eingriffsgliedern an den anderen Stationen nicht so optimale Führung reicht aber völlig aus. Gegenhaltend wirken in diesem Fall die beiden Eingriffsglieder 27,28 mit kurzem Hebelarm.

## Patentansprüche

1. Etikettierstation für Gegenstände, insbesondere Flaschen, mit mehreren längs einer Bahn hintereinander angeordneten Stationen, und zwar einer Beleimungswalze (15), einem Etikettenkasten (16) und einem Etikettenübertragungszylinder (18) sowie mit mindestens einem auf einem sich drehenden Träger (1) drehbar gelagerten und bei jeder Umdrehung des Trägers (1) an den Stationen (15,16,18) mit unterschiedlicher Winkelgeschwindigkeit vorbeibewegten Entnahmeelement (2,3,4,5) für die Etiketten, das jeweils eine nach außen gewölbte, sich an den Stationen (15,16,18) abwälzende Aufnahmefläche (2′,3′,4′,5′) für das Etikett aufweist, wobei als Antrieb für jedes Entnahmeelement (2,3,4,5) ein Kurvengetriebe vorgesehen ist, das aus einer für alle Entnahmeelemente (2,3,4,5) gemeinsamen, ortsfesten Doppelkurvenscheibe (31) mit in zwei Ebenen übereinander angeordneten einseitigen Kurven (32,33) und aus zwei Sätzen von je zwei Eingriffsgliedern (26,27,28,29) besteht, die zueinander winklig versetzt auf der Antriebswelle (6,7,8,9) des Entnahmeelementes oder einer mit ihr gekuppelten Lagerwelle (25) mittels eines Trägerelementes (24) gelagert sind und durch Formschluß mit den beiden Kurven (32,33) bei Drehung des Trägers (1) den Zwangslauf eines jeden Entnahmeelementes (2,3,4,5) über seine volle Umdrehung sichern,
**dadurch gekennzeichnet,** daß sämtliche Eingriffsglieder (26,27,28,29) mit ihren Achsen innerhalb der Gangpolkurve des Kurvengetriebes liegen und mindestens ein Eingriffsglied (26,29) teilweise außerhalb der Gangpolkurve liegt.

2. Etikettierstation nach Anspruch 1,
**dadurch gekennzeichnet,** daß sämtliche Eingriffsglieder (26,27,28,29) teilweise außerhalb der Gangpolkurve liegen.

3. Etikettierstation nach Anspruch 1 oder 2,
**dadurch gekennzeichnet,** daß zumindest einige Eingriffsglieder (26,27,28,29) gegeneinander um einen Winkel (α) ungleich 90° versetzt sind und unterschiedlich lange Hebelarme haben.

4. Etikettierstation nach Anspruch 3,
**gekennzeichnet durch** folgende Eingriffsalternativen der Eingriffsglieder (26,27,28,29):
Entweder sind zwei Eingriffsglieder (26,29) mit großen Hebelarmen oder zwei Eingriffsglieder (27,28) mit kleinen Hebelarmen und ein Eingriffsglied (26,29) mit großem Hebelarm im Eingriff mit den Kurven (32,33).

5. Etikettierstation nach Anspruch 4,
**gekennzeichnet durch** folgende Eingriffsalternativen:
a) An der Leimwalze (15) sind zwei Eingriffsglieder (27,28) mit kleinen Hebelarmen drehmomentübertragend und ein Eingriffsglied (26) mit großem Hebelarm gegenhaltend wirksam.
b) An dem Etikettenkasten (16) sind ein Eingriffsglied (26) mit großem Hebelarm drehmomentübertragend und ein Eingriffsglied (29) mit großem Hebelarm gegenhaltend wirksam.
c) An dem Etikettenübertragungszylinder (18) sind ein Eingriffsglied (29) mit großem Hebelarm drehmomentübertragend und zwei Eingriffsglieder (27,28) mit kleinen Hebelarmen gegenhaltend wirksam.

6. Etikettierstation nach einem der Ansprüche 3 bis 5,
**dadurch gekennzeichnet,** daß das am Etikettenkasten (16) drehmomentwirksame Eingriffsglied (26) der der Antriebs- oder Lagerwelle (25) näherliegenden Kurve (32) zugeordnet ist.

7. Etikettierstation nach einem der Ansprüche 3 bis 6,
**dadurch gekennzeichnet,** daß jeder Satz Eingriffsglieder (26-29) ein Eingriffsglied (26,29) mit langem Hebelarm und ein gegenüberliegendes Eingriffsglied (27,28) mit kurzem Hebelarm umfaßt.

8. Etikettierstation nach einem der Ansprüche 1 bis 7,
**dadurch gekennzeichnet,** daß der Laufkreis (R_{A}) der Antriebswelle (6) des Entnahmeelementes (2) größer ist als der Laufkreis (R_{L}) der Lagerwelle (25) des Entnahmeelementes (2).

9. Etikettierstation nach einem der Ansprüche 3 bis 8,
**dadurch gekennzeichnet,** daß bei einem zwischen der Antriebswelle (6) und der Lagerwelle (25) liegenden Zahnradübersetzungsgetriebe (19-26) zumindest ein Eingriffsglied (26) mit langem Hebelarm den Teilkreis eines auf der Lagerwelle (25) angeordneten Zahnrades (23′,23a,23b) tangiert oder überragt.

10. Etikettierstation nach Anspruch 9,
**dadurch gekennzeichnet,** daß die Eingriffsglieder (26,27) aus auf Lagerzapfen (26a,27a) gelagerten Rollen (26b,27b) bestehen, wobei die der Lagerwelle (25) nächstgelegenen Lagerzapfen (26a,27a) einstückig mit dem Trägerelement (24) verbunden sind, da auf einem radial zurückversetzten Absatz das Zahnrad (23′,23a,23b) trägt.

## Claims

1. Labelling station for articles, especially bottles, having a plurality of stations, which are disposed behind one another longitudinally of a track, said stations including a glueing roller (15), a box of labels (16) and a label transferring cylinder (18), and at least one extraction member (2, 3, 4, 5) for extracting the labels, which member is rotatably mounted on a rotating support (1) and, during each rotation of the support (1), is moved past the stations (15, 16, 18) at a variable angular velocity, said extraction member having an outwardly curved pick-up face (2′, 3′, 4′, 5′) which serves to pick-up the label and moves against the stations (15, 16, 18), a cam gear being provided as a drive means for driving each extraction member (2, 3, 4, 5) and comprising a stationary double cam disc (31), which is common to all of the extraction members (2, 3, 4, 5), and has unilateral cams (32, 33), which are disposed above one another in two planes, and comprising two sets of two engagement members (26, 27, 28, 29) each, which engagement members are mounted, in an angularly offset manner relative to one another, on the drive shaft (6, 7, 8, 9) of the extraction member or on a bearing shaft (25), which is connected to said drive shaft, by means of a supporting member (24) and ensure the positive operation of each and every extraction member (2, 3, 4, 5) during its entire rotation as a result of its being interlocked with the two cams (32, 33) upon rotation of the support (1), characterised in that all of the engagement members (26, 27, 28, 29) lie with their axes inwardly of the movement pole cam of the cam gear, and at least one engagement member (26, 29) lies partially outwardly of the movement pole cam.

2. Labelling station according to claim 1, characterised in that all of the engagement members (26, 27, 28, 29) lie partially outwardly of the movement pole cam.

3. Labelling station according to claim 1 or 2, characterised in that at least some of the engagement members (26, 27, 28, 29) are offset relative to one another by an angle (α) not equal to 90° and have lever arms of variable lengths.

4. Labelling station according to claim 3, characterised by the following engagement alternatives for the engagement members (26, 27, 28, 29):
either two engagement members (26, 29) with large lever arms or two engagement members (27, 28) with small lever arms and one engagement member (26, 29) with a large lever arm are in engagement with the cams (32, 33).

5. Labelling station according to claim 4, characterised by the following engagement alternatives:
a) at the glueing roller (15), two engagement members (27, 28) with small lever arms transmit torque and one engagement member (26) with a large lever arm provides counter-support.
b) at the box of labels (16), one engagement member (26) with a large lever arm transmits torque and one engagement member (29) with a large lever arm provides counter-support.
c) at the label transmitting cylinder (18), one engagement member (29) with a large lever arm transmits torque and two engagement members (27, 28) with small lever arms provide counter-support.

6. Labelling station according to one of claims 3 to 5, characterised in that the engagement member (26), which transmits the torque at the box of labels (16), is associated with the cam (32) situated relatively close to the drive or bearing shaft (25).

7. Labelling station according to one of claims 3 to 6, characterised in that each set of engagement members (26-29) includes one engagement member (26, 29) with a long lever arm and one oppositely situated engagement member (27, 28) with a short lever arm.

8. Labelling station according to one of claims 1 to 7, characterised in that the operating circle (R_{A}) of the drive shaft (6) for the extraction member (2) is greater than the operating circle (R_{L}) of the bearing shaft (25) for the extraction member (2).

9. Labelling station according to one of claims 3 to 8, characterised in that, when the toothed wheel transmission gear (19-26) lies between the drive shaft (6) and the bearing shaft (25), at least one engagement member (26) with a long lever arm is tangential to, or protrudes beyond, the graduated circle of a toothed wheel (23′, 23a, 23b) disposed on the bearing shaft (25).

10. Labelling station according to claim 9, characterised in that the engagement members (26, 27) comprise rollers (26b, 27b), which are mounted on bearing pins (26a, 27a), the bearing pins (26a, 27a) situated nearest the bearing shaft (25) being integrally connected to the supporting member (24), which supports the toothed wheel (23′, 23a, 23b) on a radially offset shoulder portion.

## Revendications

1. Poste d'étiquetage pour articles, et particulièrement pour bouteilles, comportant plusieurs postes disposés successivement le long d'une glissière, à savoir un rouleau d'encollage (15), un bac réserve d'étiquettes (16) et un cylindre convoyeur d'étiquettes (18), et au moins un élément de prélèvement d'étiquettes (2, 3, 4, 5) qui, disposé mobile autour d'un axe sur un support tournant (1) et déplacé à différentes vitesses angulaires lors de chaque rotation de support, présente chaque fois une face de réception (2′, 3′, 4′, 5′) pour l'étiquette, convexe et roulant contre les postes (15, 16, 18), l'entraînement de chaque élément de prélèvement d'étiquettes (2, 3, 4, 5) étant assuré par une commande à came constituée d'un disque à double came (31) monté fixe et commun à tous les éléments de prelèvement (2, 3, 4, 5) avec des cames asymétriques superposées sur deux plans, et de deux ensembles de deux pièces de contact (26, 27, 28, 29) disposées, en déport angulaire l'un par rapport à l'autre, au moyen d'un élément-support (24) sur l'arbre d'entraînement (6, 7, 8, 9) de l'élément de prélèvement ou sur un arbre d'appui (25) couplé à ce dernier, et assurant la rotation complète de chaque élément de prélèvement d'étiquettes (2, 3, 4, 5) lors de la rotation du support (1) par complémentarité de forme avec les deux cames (32, 33),
caractérisé en ce que l'ensemble des pièces de contact (26, 27, 28, 29) et les axes correspondants sont disposés à l'intérieur de la courbe développée de la commande à cames, et qu'au moins une pièce de contact (26, 29) se trouve partiellement hors de la courbe.

2. Poste d'étiquetage selon la revendication 1,
caractérisé en ce que l'ensemble des pièces de contact (26, 27, 28, 29) est en partie hors de la courbe développée.

3. Poste d'étiquetage selon la revendication 1 ou 2, caractérisé en ce qu'au moins quelques pièces de contact (26, 27, 28, 29) présentent un décalage angulaire les unes par rapport aux autres d'un angle (α) différent de 90°, et sont équipées de bras de levier de différentes longueurs.

4. Poste d'étiquetage selon la revendication 3,
caractérisé par l'alternative suivante pour les pièces de contact (26, 27, 28, 29) :
Soit deux pièces de contact (26, 29) avec de grands bras de levier, soit deux pièces de contact (27, 28) avec de petits bras de levier et une pièce de contact (26, 29) avec un grand bras de levier en prise avec les cames (32, 33).

5. Poste d'étiquetage selon la revendication 4, caractérisé par les alternatives de contact suivantes :
a) Au niveau du rouleau d'encollage (15), deux pièces de contact (27, 28) équipées de petits bras de levier transmettent le couple, tandis qu'une pièce de contact (26) à grand bras de levier exerce une contre-force.
b) Au niveau du bac réserve d'étiquettes (16), une pièce de contact (26) à grand bras de levier transmet le couple, tandis qu'une pièce de contact (29) à grand bras de levier exerce une contre-force.
c) Au niveau du cylindre de transfert d'étiquettes (18), une pièce de contact (29) à grand bras de levier transmet le couple, tandis que deux pièces de contact (27, 28) à petits bras de levier exercent une contre-force.

6. Poste d'étiquetage selon l'une des revendications 3 à 5,
caractérisé en ce que la pièce de contact (26) qui transmet le couple au niveau du bac réserve d'étiquettes (16) est associée à la came (32) la plus proche de l'arbre d'entraînement ou d'appui (25).

7. Poste d'étiquetage selon l'une des revendications 3 à 6,
caractérisé en ce que chaque ensemble de pièces de contact (26-29) comprend une pièce de contact (26, 29) à bras de levier long et une pièce de contact (27, 28) opposée à bras de levier court.

8. Poste d'étiquetage selon l'une des revendications 1 à 7,
caractérisé en ce que le cercle de déplacement (R_{A}) de l'arbre d'entraînement (6) de l'élément de prélèvement (2) des étiquettes est plus grand que le cercle de déplacement (R_{L}) de l'arbre d'appui (25) de l'élément de prélèvement (2).

9. Poste d'étiquetage selon l'une des revendications 3 à 8,
caractérisé en ce qu'au niveau d'un renvoi à engrenages (19-26) situé entre l'arbre d'entraînement (6) et l'arbre d'appui (25), au moins une pièce de contact (26) à grand bras de levier tangente ou dépasse le cercle primitif de référence d'une roue dentée (23′, 23a, 23b) placée sur l'arbre d'appui (25).

10. Poste d'étiquetage selon la revendication 9,
caractérisé en ce que les pièces de contact (26, 27) consistent en des galets (26b, 27b) logés sur des tourillons (26a, 27a), les tourillons (26a, 27a) les plus proches de l'arbre d'appui (25) étant solidaires de l'élément-support (24), puisque la roue dentée (23′, 23a, 23b) porte sur un décrochement en retrait dans le sens radial.
